# EUROPÄISCHE PATENTSCHRIFT

(11) **EP 1 270 648 B1**
(45) Veröffentlichungstag und Bekanntmachung des Hinweises auf die Patenterteilung: **19.04.2006**
(21) Anmeldenummer: 02010646.4
(22) Anmeldetag: 11.05.2002
(51) Int. Cl.: C08J 3/215, C08L 21/00, C08K 3/04

(54) **Verfahren zur Herstellung von Russfüllstoffe enthaltenden Kautschukpulvern**
Process for preparing rubber powders containing carbon black filler
Procédé pour la préparation de poudres de caoutchouc chargées de noir de carbone

(30) Priorität: 28.06.2001 DE 10131327
(43) Veröffentlichungstag der Anmeldung: 02.01.2003
(73) Patentinhaber: PKU Pulverkautschuk Union GmbH, 45764 Marl (DE)
(72) Erfinder: Görl, Udo, Dr., 45657 Recklinghausen (DE); Schmitt, Matthias, 69151 Neckargemünd (DE); Stober, Reinhard, Dr., 63594 Hasselroth (DE); Gouw, Andreas, Haltern 45721 (DE)

(56) Entgegenhaltungen:
- EP-A- 1 127 911
- US-A- 4 032 501

## Beschreibung

Die Erfindung betrifft ein Verfahren zur Herstellung russgefüllter Kautschukpulver unter Verwendung von in organischen Lösungsmitteln hergestellten und/oder befindlichen Kautschukarten, die so hergestellten Pulver und deren Verwendung in der kautschukverarbeitenden Industrie.

Über Ziel und Zweck des Einsatzes von Pulverkautschuken sowie über mögliche Verfahren zu ihrer Herstellung sind eine Vielzahl von Publikationen erschienen [1-3]. Die Erklärung für das Interesse an pulverförmigen Kautschuken ergibt sich zwanglos aus der Verarbeitungstechnik der Gummiindustrie. Dort werden die Kautschukmischungen mit einem hohen Aufwand an Zeit, Energie und Personal hergestellt. Hauptgrund hierfür ist, dass der Rohstoff Kautschuk ballenförmig vorliegt und die weiteren Bestandteile der vulkanisierbaren Mischung in die Kautschukphase eingearbeitet werden müssen.

Die Zerkleinerung eines Ballens, die innige Vermischung mit Füllstoffen, Mineralölweichmachern und Vulkanisationshilfsmitteln erfolgt auf Walzen oder in Innenmischern in mehreren Verfahrensstufen. Zwischen den Stufen wird die Mischung im allgemeinen auf einer Batch-off-Anlage abgekühlt, als Fell auf Paletten abgelegt und zwischengelagert. Den Innenmischern, bzw. Walzen, werden entsprechende Extruder- oder Kalandrierprozesse nachgeschaltet.

Aus dieser sehr aufwendigen Technik der Kautschukverarbeitung kann nur eine völlig neue Verarbeitungstechnologie herausführen.

Es wird daher seit längerem der Einsatz rieselfähiger Kautschukpulver diskutiert, weil sich damit die Möglichkeit ergibt, Kautschukmischungen analog thermoplastischen Kunststoffpulvern, bzw. Granulate, einfach und schnell verarbeiten zu können.

Die allgemein in der Gummiindustrie eingesetzten Kautschukarten unterteilt man in ihrer Herstellung - der Polymerisation von diversen Monomeren - nach zwei grundsätzlich unterschiedlichen Verfahren:

### a) Polymerisation in Wasser (Emulsionspolymerisation)

Wie der Titel schon andeutet, werden bei diesem Verfahren die Ausgangsmonomere im Wasser unter Zuhilfenahme von geeigneten Startermolekülen radikalisch zu hochmolekularen Einheiten polymerisiert. Nach der Polymerisation liegen die Kautschukmoleküle bei Anwesenheit von Emulgatoren als feinverteilte Tröpfchen im Wasser vor. Man spricht in diesem Zusammenhang von Kautschuklatex bzw. Kautschukemulsion. Sie bildet den Kautschukrohstoff für die Herstellung von Pulverkautschuk aus der Wasserphase, woraus dieser nach Zugabe von Füllstoffen in der Regel durch säurekatalytische Cofällung entsteht.

Zahlreiche Veröffentlichungen [1-3] und Patentschriften [4] aus der Vergangenheit und zu neueren Entwicklungen liegen hierzu vor. Da sie nicht zum eigentlichen Gegenstand dieser hier zu beschreibenden Entwicklungen zählen, soll an dieser Stelle jedoch nicht näher auf diese umfangreiche Literatur eingegangen werden.

Es gilt lediglich festzustellen, dass zu den bekanntesten Kautschukarten, die in Wasser vorliegen, bzw. hergestellt werden, der Naturkautschuk (NR), der Emulsions-Styrol-Butadienkautschuk (E-SBR), der Nitrilkautschuk (NBR) und der Chloroprenkautschuk (CR) gehören. Sämtliche dieser Kautschuktypen können mit Füllstoffen, wie z.B. Industrierussen und gefällten silikatischen Füllstoffen zu Kautschukpulvern umgesetzt werden.

### b) Polymerisation in organischem Lösungsmittel

Die zweite große Gruppe der Kautschuke stellen Produkte dar, die in einem organischen Lösemittel in der Regel anionisch polymerisiert werden und damit nach der Polymerisation auch in diesem Lösungsmittel vorliegen. Wichtige Kautschukarten, die so hergestellt werden, sind u.a. Styrol-Butadien-Kautschuk (L-SBR), Butadienkautschuk (BR), Butyl- und Halogenbutylkautschuke sowie Ethylen-Propylen-Kautschuke mit (EPDM) und ohne (EPM) einpolymerisierter Terkomponente.

Der Prozess zur Herstellung eines Kautschukpulvers aus Lösungspolymeren (in. org. Lösungsmittel gelöst) muss dieser völlig anders gearteten Kautschukausgangsform gerecht werden. Im Vergleich zur wässrigen Kautschukemulsion ergeben sich folgende neue Problemstellungen:
- Die direkte Zugabe des Füllstoffs, insbesondere des Russes in die Kautschuklösung ist problematisch, da der Füllstoff das gesamte Lösungsmittel aufnimmt (lipophil), das Kautschuk/Füllstoffgemisch hierdurch verklumpt, so dass ein freifließendes Kautschukpulver kaum darstellbar ist. Darüber hinaus hält der Russ aufgrund seiner hohen adsorptiven Kräfte das Lösungsmittel fest, so dass selbst unter Destillationsbedingungen das Lösungsmittel nur schwer quantitativ aus dem Produkt zu entfernen ist. Für ein solches Produkt, in der Gummitechnik eingesetzt, würde die Gefahr einer permanenten, nicht tolerierbaren Abgabe von Lösungsmittelspuren während der Verarbeitungsprozesse bestehen.
- Die direkte Herstellung des Kautschukpulvers aus der Polymerlösung macht Maßnahmen zur Beeinflussung (Reduktion) der Klebrigkeit, als Voraussetzung für ein rieselfähiges förder- und silierbares Produkt nur schwer möglich.

Bei den Kautschukpulvern aus wässrigen Kautschukemulsionen konnte dies durch Aufbringen einer seperaten Füllstoffschicht um jedes Kautschukkorn während der Koagulation des Latex bei bestimmten pH-Wert-Einstellungen erreicht werden.

In einem organischen Lösungsmittel hingegen ist eine säurekatalytische Koagulation und damit das Aufbringen einer wirkungsvollen Trennschicht um das Kautschukkorn nicht möglich. In diesem Falle verbleibt nur das nachträgliche Pudern des Produktes mit der Gefahr, dass sich dieses Trennmittel bei Förderung und Silierung vom Korn ablöst, sich hierdurch die Klebrigkeit erhöht und dann zu schwerwiegenden Problemen bei der Verarbeitung führt. Auch Schwankungen im Füllgrad könnten die Folge sein. Darüber hinaus besteht bei Verwendung von Trennmitteln, die nicht Bestandteil einer Kautschukmischung sind, die Gefahr einer Produktverunreinigung und führt daher möglicherweise zu einer unzumutbaren Verschlechterung des anwendungstechnischen Wertebildes.

Dies bedeutet, dass die Herstellung eines russgefüllten Kautschukpulvers auf Basis von Lösungspolymeren (in organischem Lösungsmittel gelöst) mit den gewünschten Produkteigenschaften (rieselfähig, freifließend, förder- und silierbar, lagerstabil) nur dann realisierbar ist, wenn es gelingt, die o. g. Aspekte in einem Herstellungsverfahren zu vereinigen, was prinzipiell nur über ein Zweiphasensystem (org./wässrig) möglich erscheint.

Die Herstellung von russgefiillten Kautschukpulvern aus org. Kautschuklösungen wurden in der Patentliteratur bereits eingehend beschrieben, wobei mehrere Verfahren zum Einsatz kommen. DE 28 22 148 beschreibt sowohl die Herstellung von Kautschukpulvern aus wässrigen Kautschukemulsionen als auch aus Kautschuklösungen. Im letzten Falle legt man eine mit Säure, Al₂(SO₄)₃ und Wasserglas versetzte Russsuspension vor, erhitzt diese auf die Siedetemperatur des Lösungsmittels, stellt den pH-Wert erneut ein und gibt anschließend die Kautschuklösung hinzu. Während das Lösungsmittel verdampft, koaguliert durch den Einfluss der Additive der Kautschuk auf dem Russ. Nach der Fest/Flüssig-Trennung und Trocknung ließe sich das Kautschukpulver erhalten, wobei keine weiteren Maßnahmen zur Verhinderung der Klebrigkeit und damit der Garantie für Förder- und Silierbarkeit auch nach langen Lagerzeiten durchgeführt werden. Wie die Praxis zeigt, lässt sich ein derart hergestelltes Produkt ohne Gegenmaßnahmen bestenfalls kurzfristig rieselfähig halten, eine Silolagerung und automatische Dosierung der Mischgeräte wäre damit problematisch.

DE 21 35 266, DE 22 14 121, DE 26 54 358 und DE 24 39 237 besehreiben Verfahren, bei denen die organische Kautschuklösung zunächst mit Hilfe großer Mengen von Emulgatoren in eine wässrige Emulsion überführt wird. Zu dieser Emulsion gibt man im Wasser suspendierten Russfüllstoff und läßt die Gesamtemulsion in eine heiße Natrium-Wasserglas-Lösung einfließen. Es kommt hierbei zu einer Co-Fällung zwischen Kautschuk und Füllstoff bei gleichzeitiger Entfernung des Lösungsmittels. Das Verfahren beruht damit ebenfalls auf dem Koagulationsprinzip durch pH-Wertänderung. Der Einsatz der Emulgatoren dient dazu, die Phasenunverträglichkeit zwischen organischer Polymerlösung und wässriger Füllstoffsuspension aufzuheben. Allerdings ist der Einsatz von derart großen Mengen Emulgatoren äußerst problematisch. Zum einen verbleibt ein Teil im fertigen Kautschukpulver und wirkt sich hierdurch u.U. ungünstig auf das gummitechnische Wertebild aus (Fremdbestandteile in der Mischung) und zum zweiten geht der andere Teil in das Abwasser, was hierdurch eine starke Belastung durch organische Bestandteile erfahrt. Auch bei dieser Herstellweise wird eine ausreichende Maßnahme zur Reduzierung der Klebrigkeit des Kautschukpulvers beschrieben. Sie dürfte auf diesem Herstellweg auch nicht durchführbar sein.

DE 22 60 340 beschreibt ein deutlich anderes Verfahren. Bei diesem wird die Kautschuklösung mit dem Füllstoff, der bereits im organischen Lösungsmittel dispergiert vorliegt, in einem Schuss zur Kautschuklösung gegeben und dabei innigst vermischt. Es wird somit keine separate Russsuspension in Wasser hergestellt. Anschließend wird das Lösungsmittel durch Druckentspannung blitzartig verdampft, wobei Temperaturen von bis zu 280°C eingesetzt werden.

Restliche Lösungsmittelbestandteile werden in einem konventionellen Trockner entfernt. Der Vorteil dieses Verfahrens liegt sicherlich darin, dass man praktisch keine Additive einsetzen muss und damit der Anteil an Fremdbestandteilen im Produkt niedrig halten kann. Weiterhin fällt kein Abwasser an, das aufgrund von org. Verunreinigungen kostspielig gereinigt werden muss.

Problematisch bei diesem Verfahren ist jedoch die Verwendung hoher Drücke und Temperaturen, die im großtechnischen Maßstab nur mit sehr aufwendigen Mitteln realisierbar sind. Gleichzeitig besteht die Gefahr, dass empfindliche Kautschukarten durch die drastischen Bedingungen geschädigt werden (Polyrnerkettenabbau) und dadurch das gummitechnische Wertebild leidet. Problematisch ist auch, dass Lösungsmittelreste im Produkt verbleiben, die zusätzlich durch einen Trocknungsschritt entfernt werden müssen. Inwieweit dies aufgrund des hohen Adsorptionsverhaltens des Russes überhaupt quantitativ möglich ist, scheint zweifelhaft (siehe Seite 3). Weiterhin stellt das Verfahren nicht dar, wie die Klebrigkeit eines so erhaltenen Produktes zu reduzieren und auf Dauer ein freifließendes, förder- und silierbares Produkt zu garantieren ist.

Die Nachteile des Standes der Technik konnten mit dem Verfahren gemäß den Patentansprüchen überwunden werden. Gegenstand der Erfindung ist daher ein Verfahren zur Herstellung eines freifließenden Kautschukpulvers, bestehend aus einem Kautschuk/Russ-Verbund auf Basis von Lösungspolymeren, das zu einem Produkt führt, das sowohl den verarbeitungstechnischen (rieselfähig, förder- und silierbar, automatisch dosierbar) als auch den kautschuktechnologischen Anforderungen entspricht.

Das Verfahren ist dadurch gekennzeichnet, dass
a) der Russ zunächst gemäß Füllgrad in Wasser ohne weitere Zusätze mit Hilfe eines scherintensiven Rührgerätes (z.B. Ultra Turrax) suspendiert wird und dabei eine Suspensionsdichte von 0,5 - 15 % eingestellt wird.
b) Anschließend wird ein Teil des Russes in Form der Suspension von der Hauptrussmenge abgetrennt. Die Menge des abgetrennten Russes (in Suspension) liegt dabei zwischen 0,5 - 20 %, bevorzugt zwischen 1 - 10 %, bezogen auf die Gesamtrussmenge im Fertigprodukt.
c) Schließlich wird die Suspension, die den Hauptruss enthält auf eine Temperatur erwärmt, die in etwa dem Siedepunkt des organischen Lösungsmittels, in dem das Polymer gelöst vorliegt, entspricht.
d) Danach wird die Kautschuklösung unter Rühren in die Russsuspension eingeleitet und dabei parallel das Lösungsmittel bei Atmosphärendruck oder unter Vakuum abdestilliert. Dabei ist sicherzustellen, dass die Temperatur des Reaktionsgemisches durch thermische Energiezufuhr in der Größenordnung bleibt, dass das Lösungsmittel abdampfen kann.
e) Durch das erfindungsgemäße erfolgt die Herstellung des Kautschuk/Füllstoff-Verbundes aus einem Zweiphasensystem heraus in ein Einphasensystem.
f) Das Verfahren ist dadurch gekennzeichnet, dass die Überfiihrung des Kautschuks in die wässrige Russsuspension und die Bildung des Kautschuk/Füllstoff-Verbundes durch destillative Entfernung der organischen Phase und nicht durch pH-Wert initierte säure- oder basekatalysierte Koagulation in Wasser erfolgt und
g) dass sich nach der Entfernung des Lösungsmittels das Produkt als. Kautschuk/Russ-Verbund in einem wässrigen Einphasensystem befindet.
h) Die wässrige, das Produkt enthaltende Suspension wird anschließend mit der gemäß Punkt b) zurückgehaltenen Russsuspension unter Rühren versetzt.
i) Die Suspension gemäß g) und h) wird danach zusätzlich mit einer Kautschukemulsion (z.B. E-SBR oder NR) in Mengen von 1 - 15 Teilen, bevorzugt 5 - 10 Teilen, bezogen auf die Gesamtmenge Kautschuk von 100 Teilen versetzt.
j) Die Suspension gemäß i) wird mittels Brönsted oder Lewissäuren, z.B. Schwefelsäure, Aluminiumsulfat usw., auf einen pH-Wert von 2 - 7, bevorzugt 2,5-5 eingestellt.
k) Durch die Verfahrensschritte h - j bildet sich um jedes Kautschukpulverkorn eine wirkungsvolle Trennschicht aus Russ, die mechanisch mit dem Russ/Kautschukgrundkorn auf Basis von Lösungspolymeren verankert wird und später im getrockneten Fertigprodukt die Klebrigkeit des Materials wirkungsvoll unterdrückt.
l) Das Produkt gemäß a - k wird durch geeignete Methoden der Fest/Flüssig-Trennung vom größten Teil des Wassers befreit.
m) Im letzten Verfahrensschritt wird das feuchte Produkt mittels gängiger Trocknungsverfahren auf eine Restfeuchte von ≤ 2 % getrocknet.

Als Lösungskautschuke können Styrolbutadienkautschuk mit Styrolgehalten von 10 - 30 %, sowie Gehalten an 1,2 Vinylbutadien von 20 - 55 %, Isopropenkautschuk, Butadienkautschuk mit 1,4 cis-Konfiguration ≥ 90 %, Polypentenamer-, Polyoctenamer, Polynorbonenkautschuk, Butylkautschuk und Halobutylkautschuk mit Chlor bzw. Brom als Halogenatom, Ethylen-Propylen (EPM) und Ethylen-Propylen-Dien (EPDM)-Kautschuke eingesetzt werden. Die Art des Lösungsmittels ist unkritisch, üblich ist in vielen Fällen Cyclohexan.

Das Verfahren zeichnet sich dadurch aus, dass es mit keinen oder nur wenigen Additiven, wie z.B. Dispergiermittel, Waserglas, Trennmittel und Gummifremdbestandteilen auskommt, eine schonenden Behandlung des Produktes ermöglicht und gleichzeitig die Anforderungen an Fließfähigkeit und Handhabbarkeit in den Produktionsprozessen der Gummiindustrie auch bei langen Lagerzeiträumen erfüllt.

Russgefüllte Kautschukmischungen auf Basis von Lösungspolymeren werden konventionell auf Knetern und Walzwerken gemischt und heute sowohl in der Reifenindustrie als auch in der Technischen Gummiindustrie eingesetzt. In der Reifenindustrie ist es in erster Linie der Butadienkautschuk, der mit verschiedenen Russen gefüllt im Verschnitt mit anderen Kautschukarten (z.B. NR; E-SBR) einen großen Anteil in Gummimischungen ausmacht. Daneben werden weitere russgefüllte Lösungspolymere, wie die Halogenbutylkautschuke im Innerlinerbereich und mengenmäßig abgestuft 3,4 Polyisopren und 1,4 Polyisopren (synth. Naturkautschuk) als Verschnittkomponente mit anderen Polymeren eingesetzt.

In der technischen Gummiindustrie kommen in erster Linie hinzu der Ethylen-Propylen-Dien-Kautschuk (EPDM) in seinen zahlreichen Varianten und der Ethylen-Propylen-Kautschuk (EPM), der ebenfalls mit verschiedenen Typen im Markt verfügbar ist. Zu erwähnen wären auch der Butylkautschuk für Heizbälge und Schläuche.

Das erfindungsgemäße Verfahren wurde so entwickelt, dass es prinzipiell für sämtliche Kautschuklösungen einsetzbar ist. Vorteilhaft ist es jedoch dann, wenn der Siedepunkt des Lösungsmittels möglichst niedrig oder zumindest unterhalb des Siedepunktes von Wasser liegt. Andernfalls bietet sich zum Abtrennen des Lösungsmittels eine Wasserdampfdestillation an.

Bei den Russfüllstoffen sind sämtliche Industrierusse, die sich nach Oberfläche (Jod-Adsorption, 5 - 1000 m²/g nach ASTM D 1510-92a) und Struktur (DBP-Zahl im Bereich von 50 - 400 mL/100g nach ASTM D 2414-92) unterscheiden, in Mengen von 30 - 1000 phr, bevorzugt 40 - 100 phr einsetzbar.

Das Verfahren ist auch dadurch gekennzeichnet, dass weitere üblicherweise in einer fertigen Kautschukmischung eingesetzten Mischungsbestandteile dem Herstellprozess des Produktes zugefügt werden können. Hierbei sind u.a. zu nennen: helle Füllstoffe (z.B. gefällte Kieselsäuren oder Naturfüllstoffe), Verarbeitungshilfsmittel (z.B. Mineralölweichmacher), Organosilane, Aktivatoren, Alterungsschutzmittel und Vernetzungschemikalien in den anwendungstechnisch üblichen Konzentrationen. Mit dem Verfahren gelingt es, feinteilige russgefüllte Kautschukpulver auf Basis von Lösungspolymeren herzustellen, die auch nach mechanischer Beanspruchung (z.B. Fördern, Verpacken) rieselfähig bleiben.

Diese führen dann zu den feinteiligen Kautschukputvern, die sich leicht verarbeiten lassen und dabei Vulkanisate mit verbesserten Eigenschaften generieren.

In den nachfolgenden Herstell- und Anwendungsbeispielen werden die Durchführbarkeit und die Vorteile der vorliegenden Erfindung erläutert, ohne dass sie auf diese Beispiele beschränkt sind.

Eingesetzte Chemikalien für die Herstellung der erfindungsgemäßen Kautschukpulver
Buna CB 24 in Cyclohexan
Butadienkautschuk (Bayer AG)
Buna EP G 6850 in Cyclohexan
Ethylen-Propylen-Dien-Kautschuk (Bayer AG)
Polysar Chlorbutyl 1255 in Cyclohexan
Chlorbutylkautschuk (Polysar)
E-SBR 1500 Emulsion
Emulsions-Styrol-Butadienkautschuk in Wasser (ca. 20 % Feststoff) (DOW)
NR Latex
Naturkautschuklatex (60 % Feststoffgehalt) (Weber und Schaer)
Ah(SO₄)₃-Lösung
Aluminiumsulfatlösung 10%ig in Wasser

### 1) Herstellung eines Kautschukpulvers unter Verwendung von Butadienkautschuk (BR) und N 234 (76 phr)

| | | |
|---|---|---|
| Einwaagen: | 71,65 g | BR-Kautschuk in Cyclohexan |
| | 3,75 g | E-SBR 1500 Emulsion |
| | 63,84 g | N 234 (entspricht 76 phr) |

Zunächst stellt man mit Hilfe eines Ultra Turrax eine 4%ige Suspension des Russes im Wasser her. Diese Russsuspension teilt man in zwei Teile auf Die Hauptmenge enthält 70 phr Russ (≅ 92,1 % der Gesamtmenge). Der zweite Teil enthält 6 phr Russ (≅ 7,9 % der Gesamtmenge). Die Suspension, die die Hauptmenge des Russes enthält, wird anschließend auf eine Temperatur von ca. 80 °C aufgeheizt und schließlich über einen Druckbehälter mit der BR-Lösung beaufschlagt. Die Überführung der BR-Lösung (in Cyclohexan) erfolgt unter Rühren innerhalb von 1,5 h, dabei wird das Cyclohexan direkt abdestilliert.

Nach vollständigem Abtrennen des Lösungsmittels liegt der gewünschte Kautschuk/Russ-Verbund in Partikelform komplett in der wässrigen Phase vor. Man läßt diese abkühlen, versetzt den Ansatz mit der zweiten Russsuspension und der E-SBR-Emulsion und senkt schließlich den pH-Wert mittels Schwefelsäure auf einen Wert von 4 ab. Hierdurch zieht der Russ mit Hilfe des E-SBR auf das BR/Russ-Korn auf und bildet eine wirkungsvolle Trennschicht um jedes einzelne Korn, die später das Verkleben und Verklumpen des Produktes wirkungsvoll unterdrückt.

Zum Schluss wurde der Ansatz über einen Filtrierschritt (z.B. Büchnertrichter) vom größten Teil des Wassers befreit und anschließend im Laborwirbelbett auf ein Restfeuchte ≤ 2 % getrocknet. Die Thermogravimetrische Analyse (TGA) des Materials ergab für den Russgehalt einen Füllgrad von 76 phr.

### 2) Herstellung eines Kautschukpulvers unter Verwendung von BR (Butadienkautschuk) und N 234 (47 phr)

| | | |
|---|---|---|
| Einwaagen: | 117,0 g | BR-Kautschuk in Cyclohexan |
| | 19,0 g | NR-Latex |
| | 63,9 g | N 234 |

Die Aufteilung der Russsuspension erfolgt in diesem Beispiel in eine Hauptmenge von 40 phr (85,1 %) und einer zweiten Teilmenge 7 phr (14,9 %).

Die Zugabe der BR-Lösung erfolgt gemäß Beispiel 1.

Nach dem vollständigen destillativen Abtrennen des Lösungsmittels versetzt man die wässrige Phase, die das Kautschukpulver enthält mit der zweiten Russmenge (als Suspension) und dem NR-Latex und senkt auch hier den pH-Wert der Suspension auf 4 ab. Der Russ zieht mit Hilfe des NR-Latex als Binder auf das BR/Russ-Korn auf

Die weitere Behandlung des Produktes entspricht Beispiel 1. Die TGA ergab einen innerhalb der Spezifikation liegenden Russfüllgrad von 48 phr.

### 3) Herstellung eines Kautschukpulvers auf Basis EPDM und N 550 (80 phr)

| | | |
|---|---|---|
| Einwaagen: | 115,0 g | EPDM-Lösung in Cyclohexan |
| | 6,1 g | E-SBR 1500 Emulsion |
| | 96,9 g | N 550 |

Die Herstellung der Russsuspension erfolgt wie in Beispiel 1. Es werden als Hauptmenge 74 phr (92,5 %) und eine zweite Teilmenge 6 phr (7,5 % Splittingruss)gewählt.

Die Suspension, die die Hauptmenge des Russes enthält, wird auf ca. 80 °C erhitzt und anschließend mit der EPDM-Lösung versetzt. Die Zugabe des EPDM erfolgt gemäß Beispiel 1.

Nach vollständiger Entfernung des Cyclohexans liegt der EPDM/N550-Verbund in Partikelform im Wasser vor. Man läßt die wässrige Phase abkühlen, versetzt mit der Splittingrusssuspension und der E-SBR-Emulsion und senkt den pH-Wert auf 4 ab (Zugabe von H₂SO₄).

Es bildet sich hierdurch die gewünschte Russtrennschicht aus, die das Kleben des späteren fertigen Kautschukpulvers wirkungsvoll unterdrückt.

Die Aufarbeitung des Produktes und die Trocknung erfolgt gemäß Beispiel 1.

Die TGA ergibt für den Russgehalt einen Wert an, der einem Füllgrad von 81 phr entspricht.

### 4) Herstellung eines Kautschukpulvers auf Basis Chlorbutylkautschuk und N 660 (55 phr)

| | | |
|---|---|---|
| Einwaagen: | 128,4 g | Chlorbutylkautschuk in Cyclohexan |
| | 6,8 g | E-SBR 1500 Emulsion |
| | 74,4 g | N 660 |

Die Herstellung der Russsuspension erfolgt gemäß Beispiel 1. Die Aufteilung des Russes beträgt als Hauptmenge 45 phr (81,8 %) und als Splittingrussmenge 10 phr (18,2 %).

Die Suspension, die den Hauptruss enthält, wird auf ca. 80 °C aufgeheizt und anschließend mit der Chlorbutylkautschuklösung versetzt (Vorgehensweise Beispiel 1). Nach dem Entfernen des Lösungsmittels verbleibt der Chlorbutylkautschuk/N660-Verbund in partikulierter Form im Wasser. Man fügt die zweite Teilmenge der Russsuspension und die E-SBR Emulsion hinzu und senkt den pH-Wert mittels Al₂(SO₄)₃ auf 4 ab. Es bildet sich die Russtrennschicht aus.

Die Aufarbeitung des Produktes erfolgt gemäß Beispiel 1. Die TGA ergab einen Russfüllgrad von 56 phr.

### Anwendungstechnische Untersuchungen der erfindungsgemäßen Kautschukpulver

### • Eingesetzte Rohmaterialien

E-SBR 1500
   Emulsions-Styrol-Butadien-Kautschuk (DOW)
SMR 10
   Standard Malaysian Rubber (Naturkautschuk)
Buna CB 24
   Butadienkautschuk cis-Gehalt ≥ 96 % (Bayer AG)
Enerthene 1849-1
   Aromatischer Mineralölweichmacher (BP)
Buna EP G 6850
   Ethylen-Propylen-Dien-Kautschuk (Bayer AG)
Polysar Chlorbutyl 1255
   Chlorbutylkautschuk (Polysar)
Lipoxol 4000
   Polywachs
Sunpar 150
   Paraffiniertes Weichmacheröl (Sun Oil)
Escorezharz 1171
   Verstärkerharz
Rhenocure TP/S
   Zinkdialkyldithiophosphat (Rhein Chemie)
PVI
   N-Cyclohexylthiophthalimid (Monsanto)

### • Gummitechnische Prüfmethoden

| | | |
|---|---|---|
| Vulkameter | [-] | DIN 53 529/3 |
| Mooney Viskosität ML 1+4 | [ME] | DIN 53 523/3 |
| Zugfestigkeit | [MPa] | DIN 53 504 |
| Modul 300% | [MPa] | DIN 53 504 |
| Bruchdehnung | [%] | DIN 53 504 |
| Shore Härte | [-] | DIN 53 505 |
| Abrieb | [mm³] | DIN 53 516 |
| Viskoelastische Eigenschaften | [-] | DIN 53 513 |
| Dispersion (Topographie) | [%] | ASTM 2663 |
| Weiterreißwiderstand | [N/mm] | ASTM D 624 |
| Compression Set | 1%1 | ASTM D 395 |

| | | |
|---|---|---|
| 1) Vergleich eines erfindungsgemäßen Kautschukpulvers auf Basis BR/N 234 76 phr gegen einen Standard in einer PKW-Laufflächenmischung auf Basis E-SBR/BR | | |

BR-Mischungen werden in der Gummiindustrie immer im Verschnitt mit anderen Kautschukarten eingesetzt. Im PKW-LF-Bereich sind Verschnitte mit E-SBR üblich. Im LKW-LF-Bereich werden hingegen Verschnitte mit NR-Kautschuk bevorzugt (Beispiel 2).

Der nachfolgende Vergleich ist daher so aufgebaut, dass für den Standard (Ballentechnologie) ein Verschnitt E-SBR 70 Teile / BR 30 Teile / N 234 80 Teile gewählt wurde. Das erfindungsgemäße Produkt (EPR I) wurde daher ebenfalls im Verschnitt mit einem Kautschukpulver auf Basis E-SBR / N 234 getestet (PR I). Seine Herstellung erfolgt gemäß DE 100 08 877.5.

Folgende Kautschukpulver wurden im Vergleich zum Standard eingesetzt:

| | | |
|---|---|---|
| EPR I | BR | 100 Teile |
| | N 234 | 76 Teile |

| | | |
|---|---|---|
| (erfindungsgemäßes Kautschukpulver, Herstellbeispiel 1) | | |

| | | |
|---|---|---|
| PR I | E-SBR 1500 | 100 Teile |
| | N 234 | 76 Teile |

| | | |
|---|---|---|
| (gemäß DE 100 08 877.5) | | |

### 1a. Rezeptur

| | 1 Standard | 2 |
|---|---|---|
| E-SBR 1500 | 70 | - |
| Buna CB 24 | 30 | - |
| EPR I | - | 58,7 |
| PR I | - | 117,7 |
| N 234 | 80 | - |
| Enerthene 1849-1 | 30 | 30 |
| ZnO RS | 3 | 3 |
| Stearinsäure | 2 | 2 |
| 6PPD | 2 | 2 |
| Wachs | 1 | 1 |
| TBBS | 1,2 | 1,2 |
| Schwefel | 1,5 | 1,5 |

### 1b. Mischvorschrift

| | | | |
|---|---|---|---|
| Innenmischer GK 1,5 E; Friktion 1:1; Stempeldruck 5,5 bar | | | |
| 70 UPM; Durchflusstemp. 60 °C; Batchtemp. ≤ 150 °C | | | |

| Standard | | EPR I / PR I | |
|---|---|---|---|
| 0-0,5' | Polymere | 0-1' | EPR I/PR I, Chemikalien |
| 0,5-2' | Russ, Öl, ZnO, Stea., 6PPD, Wachs Lüften und Säubern | 1' | Lüften und Säubern |
| | | 1-4' | Mischen und Ausfahren |
| 2' | Mischen und Ausfahren | | |
| 2-4' | | | |
| 40 UPM; Durchflusstemp. 50°C; Batchtemp. ≤ 110°C | | | |
| 0-2' | Batch Stufe 1, Vernetzungschemikalien | | |
| 2' | Ausstoßen anschließend auf Walze Fell bilden | | |

### 1c. Gummitechnische Daten (Vulkanisationstemperatur 165 °C)

| Methode | Einheit | Standard | EPR I/PR I |
|---|---|---|---|
| ML 1+4 | [ME] | 58 | 57 |
| Dmax-Dmin | [Nm] | 15,90 | 16,12 |
| t_{10%} | [min] | 5,1 | 4,2 |
| t_{95%} | [min] | 22,9 | 24,8 |
| Zugfestigkeit | [MPa] | 16,8 | 18,2 |
| Modul 300% | [MPa] | 8,9 | 9,3 |
| Bruchdehnung | [%] | 460 | 470 |
| Shore Härte | [-] | 67 | 69 |
| Weiterreißw. Die A | [N/mm] | 39 | 45 |
| DIN Abrieb | [mm³] | 63 | 56 |

Das erfindungsgemäße Kautschukpulver zeigt im Verschnitt mit E-SBR Vorteile gegenüber dem Standard in den Festigkeitswerten, dem Weiterreißwiderstand und im DIN Abrieb.

### 2) Vergleich eines erfindungsgemäßen Kautschukpulvers auf Basis BR/ N 234 47phr gegen einen Standard in einer LKW-Laufflächenmischung auf Basis NR/BR

Der Verschnitt zwischen Naturkautschuk und BR-Kautschuk wurde für den Standard wie folgt gewählt:
NR 80 Teile / BR 20 Teile / N 234 50 Teile

Bei den Kautschukpulvern wurden folgende Produkte im Verschnitt eingesetzt:

| | | |
|---|---|---|
| EPR II | BR | 100 Teile |
| | N 234 | 47 Teile |

| | | |
|---|---|---|
| (erfindungsgemäßes Kautschukpulver, Herstellbeispiel 2) | | |

| | | |
|---|---|---|
| PR II | NR | 100 Teile |
| | N 234 | 47 Teile |

| | | |
|---|---|---|
| (gemäß DE 100 08 877.5) | | |

### 2a. Rezeptur

| | 1 Standard | 2 |
|---|---|---|
| SMR 10 | 80 | - |
| Buna CB 24 | 20 | - |
| EPR II | - | 32,7 |
| PR II | - | 114,3 |
| N 234 | 50 | - |
| ZnO RS | 4 | 4 |
| Stearinsäure | 2 | 2 |
| 6PPD | 1 | 1 |
| TMQ | 1,5 | 1,5 |
| Wachs | 1 | 1 |
| TBBS | 1,2 | 1,2 |
| Schwefel | 1,4 | 1,4 |
| PVI | 0,15 | 0,15 |

### 2b. Mischvorschrift

| | | | |
|---|---|---|---|
| Innenmischer GK 1,5 E; Friktion 1:1; Stempeldruck 5,5 bar | | | |
| 70 UPM; Durchflusstemp. 60 °C; Batchtemp. ≤ 150 °C | | | |

| Standard | | EPR II / PR II | |
|---|---|---|---|
| 0-0,5' | Polymere | 0-3' | EPR II/PR II, ZnO, Stea., Wachs 6PPD, TMQ |
| 0,5-2' | Russ, ZnO, Stea., 6PPD, Wachs, TMQ | 3-3,15 | Ausfahren |
| 2' | Lüften und Säubern | 3,5` | |
| 2-4' | Mischen und Ausfahren | | |
| 40 UPM; Durchflusstemp. 50°C; Batchtemp ≤ 110 °C | | | |
| 0-2' | Batch Stufe 1, Vernetzungschemikalien | | |
| 2' | Ausstoßen, anschließend auf Walze Fell bilden | | |

### 2c. Gummitechnische Daten (Vulkanisationstemperatur 150 °C)

| Methode | Einheit | Standard | EPR II/PR II |
|---|---|---|---|
| Dmax-Dmin | [Nm] | 16,73 | 16,43 |
| t_{10%} | [min] | 5,0 | 5,4 |
| t_{95%} | [min] | 12,4 | 13,3 |
| Zugfestigkeit | [MPa] | 22,8 | 24,7 |
| Modul 300% | [MPa] | 11,5 | 12,0 |
| Bruchdehnung | [%] | 500 | 490 |
| Shore Härte | [-] | 66 | 68 |
| Weiterreißw. Die A | [N/mm] | 77 | 86 |
| E* 0°C | [MPa] | 13,3 | 13,4 |
| E' 60°C | [MPa] | 8,5 | 9,2 |
| E'' 60°C | [MPa] | 1,1 | 1,1 |
| tan δ 60°C | [-] | 0,132 | 0,115 |

Die Mischung, die das erfindungsgemäße Kautschukpulver enthält, zeichnet sich durch günstigere Festigkeitswerte, Weiterreißwiderstände und niedrigeren Verlustwinkel tan δ aus.

### 3) Vergleich eines erfindungsgemäßen Kautschukpulvers auf Basis EPDM gegen eine Ballenkautschuk Standardmischung

Folgendes Kautschukpulver wurde im Vergleich zum Standard eingesetzt:

| | | |
|---|---|---|
| EPR III | EPDM G 6850 | 100 Teile |
| | N 550 | 80 Teile (Herstellbeispiel 3) |

### 3a. Rezeptur

| | 1 Standard | 2 |
|---|---|---|
| Buna EP G 6850 | 100 | - |
| EPR III | - | 180 |
| N 550 | 80 | - |
| ZnO RS | 5 | 5 |
| Stearinsäure | 2 | 2 |
| Lipoxol 4000 | 4 | 4 |
| Sunpar 150 | 60 | 60 |
| MBT | 1 | 1 |
| TMTD | 0,5 | 0,5 |
| Rhenocure TP/S | 2 | 2 |
| Schwefel | 1,5 | 1,5 |

### 3b. Mischvorschriit

| | | | |
|---|---|---|---|
| Innenmischer GK 1,5 E; Friktion 1:1; Stempeldruck 5,5 bar | | | |
| 80 UPM; Durchflusstemp. 90 °C; Batchtemp ≤ 150 °C | | | |

| Standard | | EPR m | |
|---|---|---|---|
| 0-1' | Polymere | 0-2' | EPR III, Öl, ZnO, Stea. |
| 1-3' | Russ, Öl, ZnO, Stea. | 2-3' . | Polywachs |
| 3-4' | Polywachs | 3' | Lüften und Säubern |
| 4' | Lüften und Säubern | 3-4,5' | Mischen und Ausfahren |
| 4-5,5' | Mischen und Ausfahren | | |
| 70 UPM; Durchflusstemp. 80 °C; Batchtemp ≤ 110 °C | | | |
| 0-2' | Batch Stufe 1, Vernetzungschemikalien | | |
| 2' | Ausstoßen, anschließend auf Walze Fell bilden | | |

### 3c. Gummitechnische Daten (Vulkanisationstemperatur 165 °C)

| Methode | Einheit | Standard | EPR III |
|---|---|---|---|
| ML 1+4 | [ME] | 42 | 41 |
| Dmax-Dmin | [Nm] | 9,99 | 10,71 |
| t_{10%} | [min] | 0,3 | 0,5 |
| t_{95%} | [min] | 6,7 | 7,4 |
| Zugfestigkeit | [MPa] | 12,0 | 12,8 |
| Modul 300% | [MPa] | 7,2 | 9,5 |
| Shore Härte | [-] | 54 | 55 |
| Dispersion (Phillips) | [%] | 9 | 9 |
| Compr. Set 72h/70°C | [%] | 18,2 | 14,1 |
| Compr.Set 48h/120°C | [%] | 40,8 | 36,9 |

Das erfindungsgemäße Kautschukpulver zeichnet sich durch höheres Verstärkungsverhalten (Modul 300 %) und durch einen niedrigeren Compression Set Wert aus.

### 4) Vergleich eines erfindungsgemäßen Kautschukpulvers auf Basis Chlorbutyl/N 660 55 phr gegen einen entsprechenden Standard

Folgendes Kautschukpulver wurde im Vergleich zum Standard eingesetzt:

| | | |
|---|---|---|
| EPR IV | Chlorbutyl 1255 | 100 Teile |
| | N 660 | 55 Teile (Herstellbeispiel 4) |

### 4a. Rezeptur

| | 1 Standard | 2 |
|---|---|---|
| Chlorbutyl 1255 | 100 | - |
| EPR IV | - | 155 |
| N 660 | 55 | - |
| Zn0 RS | 5 | 5 |
| Stearinsäure | 1 | 1 |
| Sunpar 150 | 10 | 10 |
| Escorezharz 1171 | 7 | 7 |
| Schwefel unlöslich | 0,6 | 0,6 |
| MBTS | 1,3 | 1,3 |

### 4b. Mischvorschrift

| | | | |
|---|---|---|---|
| Innenmischer GK 1,5 E; Friktion 1:1; Stempeldruck 5,5 bar | | | |
| 80 UPM; Durchflusstemp. 90 °C; Batchtemp. ≤ 150 °C | | | |

| Standard | | EPR IV | |
|---|---|---|---|
| 0-1` | Polymere | 0-3' | EPR IV, Chemikalien |
| 1-3,5' | Russ, Öl, ZnO, Stea., Harz | 3' | Lüften und Säubern |
| | Lüften und Säubern | 3-4' | Mischen und Ausfahren |
| 3,5` | Mischen und Ausfahren | | |
| 3,5-4,5` | | | |
| 40 UPM; Durchflusstemp. 40 °C; Batchtemp. ≤ 100 °C | | | |
| 0-1,5' | Batch Stufe 1, Vernetzungschemikalien | | |
| 1,5' | Ausstoßen; anschließend auf Walze Fell bilden, | | |

### 4c. Gummitechnische Daten (Vulkanisationstemperatur 165 °C)

| Methode | Einheit | Standard | EPR IV |
|---|---|---|---|
| ML 1+4 | [ME] | 65 | 62 |
| Dmax-Dmin | [Nm] | 9,77 | 9,88 |
| t_{10%} | [min] | 1,4 | 1,2 |
| t_{95%} | [min] | 16,9 | 21,9 |
| Zugfestigkeit | [MPa] | 8,2 | 8,7 |
| Modul 300% | [MPa] | 6,7 | 8,0 |
| Bruchdehnung | [%] | 370 | 370 |
| Shore Härte | [-] | 57 | 59 |
| Dispersion | [%] | 9 | 9 |

Das erfindungsgemäße Kautschukpulver zeichnet sich durch ein höheres Verstärkungsverhalten aus

### Literatur

[1] U. Görl, K.H. Nordsiek, Kautsch. Gummi Kunstst. 51 (1998) 250
[2] U. Görl, H. Lauer, Gummi, Fasern Kunstst. 53 (2000) 261
[3] R. Uphus, O. Skibba, R.H. Schuster, U. Görl, Kautsch. Gummi Kunstst. 53 (2000) 276
[4] DE 28 22 148, DE 37 23 213, DE 37 23 214, EP 99 911 7844.5, DE 198 154 53.4, DE 198 43 301.8, DE 100 56 636.0

## Patentansprüche

1. Verfahren zur Herstellung feinteiliger freifließender Kautschukpulver, bestehend aus Russfüllstoffen und einem Kautschuk, hergestellt nach dem Lösungspolymerisationsverfahren, der in einem organischen Lösungsmittel vorliegt,
**dadurch gekennzeichnet, dass**:
a) der Russ zunächst gemäß Füllgrad in Wasser ohne weitere Zusätze mittels eines scherintensiven Rührgerätes suspendiert wird und dabei auf eine Suspensionsdichte von 0,5 -15 % eingestellt wird,
b) anschließend ein Teil des Russes in Form der Suspension von der Hauptrussmenge abgetrennt wird, wobei die Menge des abgetrennten Russes (in Suspension) dabei zwischen 0,5 - 20 %, bezogen auf die Gesamtrussmenge im Fertigprodukt, liegt,
c) schließlich die Suspension, die den Hauptruss enthält, auf eine Temperatur erwärmt wird, die in etwa dem Siedepunkt des organischen Lösungsmittels, in dem das Polymer gelöst vorliegt, entspricht,
d) danach die Kautschuklösung unter Rühren in die Russsuspension eingeleitet wird und dabei parallel das Lösungsmittel bei Atmosphärendruck oder unter Vakuum abdestilliert wird, wobei die Temperatur des Reaktionsgemisches durch thermische Energiezufuhr in der Größenordnung bleibt, dass das Lösungsmittel abdampfen kann, dabei der Kautschuk/Füllstoff-Verbund aus einem Zweiphasensystem heraus in ein Einphasensystem überführt wird,
die Überführung des Kautschuks in die wässrige Russsuspension und die Bildung des Kautschuk/Füllstoff-Verbundes durch destillative Entfernung der organischen Phase in Wasser erfolgt,
wobei sich nach der Entfernung des Lösungsmittels das Produkt als Kautschuk/Russ-Verbund in einem wässrigen Einphasensystem befindet,
e) die wässrige, das Produkt enthaltende Suspension mit der gemäß Punkt b) zurückgehaltenen Russsuspension unter Rühren versetzt wird,
f) die Suspension gemäß d) und e) zusätzlich mit einer Kautschukemulsion in Mengen von 1 - 15 Teilen, bezogen auf die Gesamtmenge Kautschuk von 100 Teilen, versetzt wird,
g) die Suspension gemäß f) mittels Brönsted oder Lewissäuren auf einen pH-Wert von 2 - 7 eingestellt wird,
wobei sich durch die Verfahrensschritte e - f um jedes Kautschukpulverkom eine wirkungsvolle Trennschicht aus Russ bildet, die mechanisch mit dem Russ/Kautschukgrundkorn auf Basis von Lösungspolymeren verankert wird,
h) das Produkt vom größten Teil des Wassers befreit wird,
i) das feuchte Produkt auf eine Restfeuchte von ≤ 2 % getrocknet wird.

2. Verfahren nach einem der vorhergehenden Ansprüche,
**dadurch gekennzeichnet,**
**dass** bei einem hohen Siedepunkt des Kautschuk-Lösungsmittels dieses durch eine Wasserdampfdestillation abgetrennt wird.

3. Verfahren nach Anspruch 1,
**dadurch gekennzeichnet,**
**dass** als Lösungskautschuke Styrolbutadienkautschuk mit Styrolgehalten von 10 - 30 %, sowie Gehalten an 1,2 Vinylbutadien von 20 - 55 %, Isopropenkautschuk, Butadienkautschuk mit 1,4 cis-Konfiguration ≥ 90 %, Polypentenamer-, Polyoctenamer, Polynorbonenkautschuk, Butylkautschuk und Halobutylkautschuk mit Chlor bzw. Brom als Halogenatom, Ethylen-Propylen (EPM) und Ethylen-Propylen-Dien (EPDM)-Kautschuke eingesetzt werden.

4. Verfahren nach einem der vorhergehenden Ansprüche,
**dadurch gekennzeichnet,**
**dass** man eine oder mehrere Kautschukemulsionen auf Basis E-SBR oder NR zur Füllstoff/Kautschuksuspension hinzugibt, die jedoch einen Anteil am Gesamtkautschuk innerhalb des Kautschukpulvers von 15 phr (parts per hundred rubber) nicht überschreitet.

5. Verfahren nach einem der vorhergehenden Ansprüche,
**dadurch gekennzeichnet,**
**dass** als Russfüllstoffe Industrierusse mit einer Oberfläche (Jod-Adsorption, 5 - 1000 m²/g nach ASTM D 1510-92a) und Struktur (DBP-Zahl im Bereich von 50 - 400 mL/100g nach ASTM D 2414-92) in Mengen von 30 - 1000 phr eingesetzt werden.

6. Verfahren nach einem der vorhergehenden Ansprüche,
dass man neben den Russfällstoffen weitere in der Gummianwendung übliche Füllstoffe, Verarbeitungshilfsmittel und Chemikalien in den kautschuktechnisch üblichen Konzentrationen zusetzen kann.

7. Freifließende Kautschuk/Füllstoff-Batches hergestellt nach den vorhergehenden Ansprüchen, die Kautschuk, Russ oder Russ und weitere Füllstoffe und Mischungsbestandteile beinhalten.

8. Verwendung der Kautschuk/Füllstoff-Batches nach Anspruch 7,zur Herstellung von vulkanisierbaren Kautschukmischungen.

## Claims

1. A process for preparing a fine-particle free-flowing rubber powder, composed of carbon black filler and of a rubber, which has been prepared by solution polymerization and is present in an organic solvent,
**characterized in that**:
a) the carbon black appropriate for the filler level is first suspended in water by means of a high-shear mixing device, without any other additive, and the solids content of the suspension is set to 0.5 - 15% in this process,
b) then some of the suspended carbon black is separated off from the main amount of carbon black, the amount of carbon black separated off (in suspension) in this process being from 0.5 - 20%, based on the total amount of carbon black in the finished product,
c) finally the suspension which contains most of the carbon black is heated to a temperature approximately equal to the boiling point of the organic solvent in which the polymer has been dissolved,
d) and then the rubber solution is introduced into the carbon black suspension, with stirring, and in parallel with this process the solvent is distilled off at atmospheric pressure or in vacuo, thermal energy being supplied here to keep the temperature of the reaction mixture in the region where evaporation of the solvent is possible,
and in this process the rubber/filler composite is converted from a two-phase system to a single-phase system,
and the organic phase is removed by distillation in water to transfer the rubber into the aqueous carbon black suspension and form the rubber/filler composite,
the product being, once the solvent has been removed, a rubber/carbon black composite in an aqueous single-phase system,
e) the aqueous suspension containing the product is mixed with the carbon black suspension retained in b), with stirring,
f) the suspension of d) and e) is also treated with 1 - 15 parts of a rubber emulsion, based on a total of 100 parts of rubber,
g) Bronsted or Lewis acid is used to adjust the pH of the suspension of f) to 2 - 7,
steps e - f of the process forming, around each grain of rubber powder, an effective carbon black release layer which is mechanically anchored to the solution-polymer-based carbon black/rubber core particle,
h) most of the water is removed from the product,
i) and the moist product is dried to a residual moisture level ≤ 2%.

2. A process according to claim 1,
**characterized in that**
the rubber solvent has a high boiling point and is separated off by steam distillation.

3. A process according to claim 1,
**characterized in that**
styrene-butadiene rubber with styrene content of 10 - 30% and with 1,2-vinylbutadiene content of 20 - 55%, isoprene rubber, butadiene rubber with ≥ 90% of 1,4-cis configuration, polypentenamer rubber, polyoctenamer rubber, polynorbornene rubber, butyl rubber, or halobutyl rubber where the halogen atom is chlorine or bromine, ethylene-propylene (EPM) rubber, or ethylene-propylene-diene (EPDM) rubber is used as solution rubber.

4. A process according to any one of the preceding claims,
**characterised in that**
one or more rubber emulsions based on ESBR or NR is/are added to the filler/rubber suspension, but the proportion of these, based on the total amount of rubber within the rubber powder, does not exceed 15 phr (parts per hundred rubber).

5. A process according to any one of the preceding claims, **characterised in that**
30 - 1000 phr of industrial carbon black with a surface area (iodine adsorption) of 5 - 1000 m²/g to ASTM D1510-92a and a structure (DBP value) in the range 50 - 400 mL/100 g to ASTM D 2414-92 are used as the carbon black filler.

6. A process according to any one of the preceding claims, **characterised in that**, besides the carbon black filler, it is possible to add, at the concentrations usual in rubber technology, other chemicals, processing aids, or fillers usually used in rubber applications.

7. A free-flowing rubber/filler masterbatch obtained according to any of the preceding claims, which contains rubber and carbon black or carbon black and other fillers and constituents of a mixture.

8. The use of the rubber/filler masterbatch as claimed in claim 7 for preparing a vulcanizable rubber mixture.

## Revendications

1. Procédé de production de poudres de caoutchouc fines non-agglomérantes, composées de charges de noir de carbone et d'un caoutchouc, produit selon le procédé de polymérisation en solution dans un solvant organique,
**caractérisé en ce que**
a) le noir de carbone, suivant le degré de charge, est tout d'abord mis en suspension dans de l'eau sans autre additif au moyen d'un agitateur à cisaillement intensif en établissant une densité de suspension comprise entre 0,5 et 15 %.
b) une partie du noir de carbone sous la forme de la suspension est ensuite séparée de la quantité principale de noir de carbone, la quantité du noir de carbone séparé (en suspension) étant alors comprise entre 0,5 et 20 % par rapport à la quantité totale de noir de carbone présente dans le produit fini,
c) la suspension contenant le noir de carbone principal est enfin portée à une température qui correspond à peu près au point d'ébullition du solvant organique dans lequel le polymère est présent sous forme dissoute.
d) la solution de caoutchouc est ensuite introduite sous agitation dans la suspension de noir de carbone et, ce faisant, le solvant est distillé à pression atmosphérique ou sous vide, la température du mélange réactionnel restant, grâce à un apport d'énergie thermique, dans un ordre de grandeurs permettant au solvant de se vaporiser pour que le système à deux phases du composite caoutchouc/charge se convertisse en un système à phase unique ;
on effectue le transfert du caoutchouc dans la suspension aqueuse de noir de carbone et la formation du composite caoutchouc/charge en éliminant par distillation la phase organique dans l'eau,
l'élimination du solvant conduisant à la présence du produit sous forme de composite de caoutchouc/noir de carbone dans un système aqueux à phase unique,
e) la suspension aqueuse renfermant le produit est reprise sous agitation dans la suspension de noir de carbone retenue selon le point b),
f) la suspension selon d) et e) est encore reprise par une émulsion de caoutchouc dans des quantités allant de 1 à 15 parties, par rapport à la quantité totale de caoutchouc de 100 parties,
g) le pH. de la suspension selon f) est ajusté à une valeur comprise entre 2 et 7 au moyen d'acides de Bronsted ou de Lewis,
les étapes e) à f) entraînant la formation d'une couche de séparation de noir de carbone efficace autour de chaque grain de poudre de caoutchouc qui s'attache mécaniquement au grain de base de noir de carbone/caoutchouc à base de polymères en solution.
h) le produit est débarrassé de la majorité de l'eau,
i) le produit humide est séché pour atteindre une humidité résiduelle ≤ 2 %.

2. Procédé selon l'une des revendications précédentes,
**caractérisé en ce que**
lorsque le solvant du caoutchouc a un point d'ébullition élevé, celui-ci est séparé par distillation à la vapeur d'eau.

3. Procédé selon la revendication 1,
**caractérisé en ce que**
les caoutchoucs en solution utilisés consistent en un caoutchouc de styrène-butadiène avec des teneurs en styrène comprises entre 10 et 30 %, ainsi que des teneurs en 1,2-vinylbutadiène comprises entre 20 et 55 %, un caoutchouc à base d'isopropène, un caoutchouc de butadiène avec une configuration cis-1,4 ≥ 90 %, un caoutchouc de polypentènamère, un polyoctènamère, un caoutchouc de polynorbonène, un caoutchouc butyle et un caoutchouc halobutyle comportant un atome de chlore ou de brome à titre d'atome d'halogène, des caoutchoucs d'éthylène-propylène (EPM) et d'éthylène-propylène-diène (EPDM).

4. Procédé selon l'une des revendications précédentes,
**caractérisé en ce qu'**
on ajoute une ou plusieurs émulsions de caoutchouc à base d'E-SBR (caoutchouc de styrène-butadiène en émulsion) ou de NR (caoutchouc naturel) à la suspension de charge/caoutchouc qui ne dépasse toutefois pas une proportion de caoutchouc total dans la poudre de caoutchouc de 15 phr (parties pour cent parties de caoutchouc).

5. Procédé selon l'une des revendications précédentes,
**caractérisé en ce que**
comme charges de noir de carbone on utilise des noirs de carbone industriels ayant une surface (Indice d'adsorption d'iode) de 5 à 1000 m²/g suivant la norme ASTM D 1510-92a et une structure (Indice d'absorption de phtalate de dibutyle) de 50 à 400 ml/100 g suivant la norme ASTM D2414-92, dans des quantités comprises entre 30 et 1000 phr.

6. Procédé selon l'une des revendications précédentes,
**caractérisé en ce qu'**
outre les charges de noir de carbone, on ajoute d'autres charges, adjuvants de traitement et produits chimiques usuels aux applications relatives au caoutchouc dans des concentrations usuelles à cette technique.

7. Lots de caoutchouc/charges non-agglomérants produits selon les revendications précédentes, qui contiennent du caoutchouc, du noir de carbone ou du noir de carbone et d'autres charges et des ingrédients de mélange.

8. Utilisation des lots de caoutchouc/charges selon la revendication 7, pour produire des mélanges de caoutchouc vulcanisables.
